# EUROPEAN PATENT SPECIFICATION

(11) **EP 0 887 497 B1**
(45) Date of publication and mention of the grant of the patent: **31.03.2004**
(21) Application number: 98201624.8
(22) Date of filing: 15.05.1998
(51) Int. Cl.: E05B 49/00, B60R 25/04, B60R 11/02

(54) **RF based theft deterrent system and method**
Hochfrequenz-Diebstahlverhinderungssystem und Verfahren
Système anti-vol à radio fréquence et procédé

(30) Priority: 23.06.1997 US 880957
(43) Date of publication of application: 30.12.1998
(73) Proprietor: Delphi Technologies, Inc., Troy, MI 48007 (US)
(72) Inventor: Peel, Christopher Edward, Noblesville, Indiana 46060 (US); Ray, William Martin, Sharpsville, Indiana 46068 (US); Wright, Thomas Andrew, Noblesville, Indiana 46060 (US); Rohn, Bruce D., Kokomo, Indiana 46902 (US)
(74) Representative: Denton, Michael John

(56) References cited:
- EP-A- 0 765 983
- EP-A- 0 767 087
- WO-A-93/05987
- DE-A- 19 526 542
- GB-A- 2 296 804
- US-A- 5 506 905

## Description

### Technical Field

This invention relates to a radio frequency based theft deterrent method and system and particularly to the security of electronic modules in vehicles.

### Background of the Invention

Personal-size remote control transmitters are widely used to provide a convenient method of locking or unlocking vehicles, and/or to remotely arm or disarm vehicle theft deterrent systems. They are also used to control home/business security systems and garage door openers.

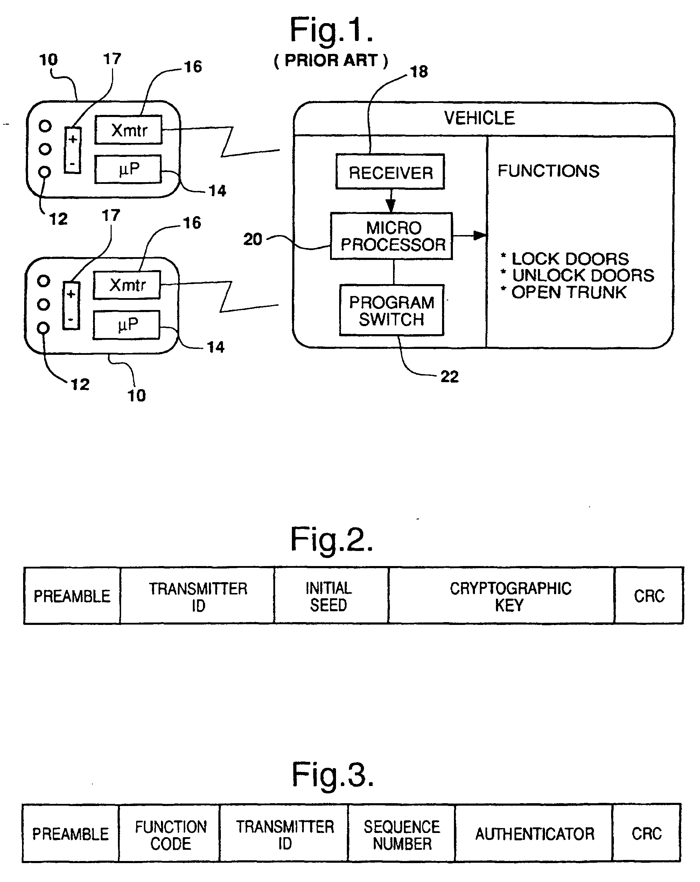

Message authentication using cryptographic techniques is a good method for preventing spoofing and playback attacks. The U.S. Patent 5,506,905 to Markowski et al entitled "AUTHENTICATION METHOD FOR KEYLESS ENTRY SYSTEM", which is incorporated herein by reference, is an example of an improved system of that type which produces very secure authenticated messages requiring a short transmission time to economize battery life in a personal transmitter. Such a keyless entry system for a motor vehicle, as shown in Figure 1, includes a number of portable remote controls or fobs 10 small enough to carry in one's pocket or on a key chain. Each fob 10 has buttons 12 for manual selection of desired functions to be performed in the vehicle, a microprocessor 14 responsive to button actuation for formulating a command message, including an authenticator code and a function code identifying the desired function to be performed, and a radio transmitter 16 for transmitting the message. The fob 10 functions are supported by a miniature battery 17 which should have a life of several years. In the vehicle a receiver 18 receives the transmitted message, if the vehicle is within the transmitter range, and a microprocessor 20 acts upon data in the received message to determine whether the authenticator code is valid, and if so, to perform the desired function. The receiver and microprocessor are part of a remote function actuator 24 (RFA) which responds to the message to lock or unlock doors, open the trunk, etc.

Each microprocessor 14 and 20 is programmed to execute a cryptographic algorithm which operates on certain stored and/or transmitted data, as well as on a selected function code to generate an authentication code which is different for every transmission, thus preventing successful replay of a previously transmitted message. The authentication code is sufficiently short to be transmitted economically but the generation procedure has a complexity that renders it impractical for an adversary to predict the next valid code based on knowledge of previously transmitted messages. The procedure for message validation is first to compare the transmitter ID with IDs stored in the receiver memory, and if an ID match is found, then for the algorithm in the microprocessor to operate on a combination of shared secret data and transmitted data to produce authentication codes, and to determine that the command is valid if the codes are the same.

Two mechanisms are jointly used to assure that the authentication code changes in an unpredictable manner. First, the algorithm operates on a seed code which is changed according to a set of rules for each transmission. A sequence number is also incremented with each transmission and is included in the message so that the receiver algorithm will know how many seed code changes to execute in order to resynchronize with the transmitter since the receiver does not necessarily receive each transmission. Second, the authenticator code is generated as a function of the seed code and the cryptographic key as well as the desired function code. Since for each transmission the function code depends on which button the operator selects, another level of complexity is added to the authenticator code generation to confound attempts to determine a predictable progression of codes, all as described in the U.S. patent 5,506,905.

In manufacture, the microprocessors of both the transmitter and the receiver are equipped with the same cryptographic engine to thereby calculate the same authenticator, given common input information. Each transmitter is permanently programmed with a cryptographic key, an initial seed, and an ID number. When a receiver is first matched with one or more transmitters, it must learn those three codes. This is accomplished by enabling the program switch 22 on the receiver and actuating the transmitter to send a program message containing these codes. The transmitter is typically actuated in this case by pressing two buttons simultaneously. The program message is shown in Figure 2. It includes a preamble which indicates the start of a message, the transmitter ID, the initial seed, the cryptographic key and a CRC. The CRC (cyclic redundancy code) is calculated from all the other field data.

During use, a normal command is generated by pressing one transmitter button and a message is transmitted in the form shown in Figure 3 including a preamble, a function code, the transmitter ID, a sequence number, an authenticator, and a CRC. If the transmitter normal message is sent a few times when the receiver is out of range, the receiver loses synchronization with the transmitter but can catch up by using the sequence number to resynchronize. If the receiver lags in sequence by a given amount such as 264 sequence numbers, it cannot automatically resynchronize. Then it is necessary to transmit a Resynch command which is like the normal command of Figure 3 except that a randomly selected sequence number is used. When the Resynch command is given, the initial seed is used along with the new sequence number to determine the authenticator in both the transmitter and the receiver.

This theft deterrent system effectively maintains vehicle doors locked if the user locks the doors. However if a door is left unlocked or entry is gained by force, the electronic components such as a radio, air bags modules or power train control modules are subject to theft. It is here proposed to extend the theft deterrent system to individual modules.

### Summary of the Invention

It is therefore an object of the invention to deter theft of electronic modules from vehicles by employing radio frequency based secure messages to enable module operation. This object is achieved with the features as defined in the independent claims 1 and 7.

A remote function actuator (RFA) is linked by a radio frequency (RF) signal to a remote transmitter or fob and is also connected to a serial data link. When the RFA determines that a valid authenticator or cipher value is received from the transmitter, it applies the cipher value along with the sequence number to the data link. The electronic modules of a vehicle such as a radio, power train control module (PCM) and a sensing and diagnostic module (SDM) for airbags are also coupled to the data link and are equipped with the same type of encryption engine as the RFA for independent evaluation of the message. Thus the seed value stored in each module must agree with that of the transmitter and RFA for the module to verify the cipher value. Normally there is agreement but if the module were stolen from another vehicle, the seed value would be different so that the module would fail to verify the cipher value and would set an error code. The error code may be used to disable the module or to light a tell tale lamp.

### Brief Description of the Drawings

The present invention will now be described, by way of example, with reference to the accompanying drawings, in which:-
Figure 1 is a block diagram of a keyless entry system according to the prior art;
Figure 2 is an illustration of message structure for programming according to the prior art;
Figure 3 is an illustration of message structure for normal messages according to the prior art;
Figure 4 is a block diagram of a theft deterrent system according to the invention; and
Figures 5 and 6 are flow charts representing the operation of the system according to the invention.

### Description of the Preferred Embodiment

The ensuing description is directed to a theft deterrent system and method based on the rolling code encryption algorithm described in the above identified U.S. patent 5,506,905. One variant from that algorithm is that the function code is not used in the calculation of the authenticator or cipher value. It will be understood that the invention applies equally well to systems using either form of the algorithm and, for that matter, to other encryption algorithms.

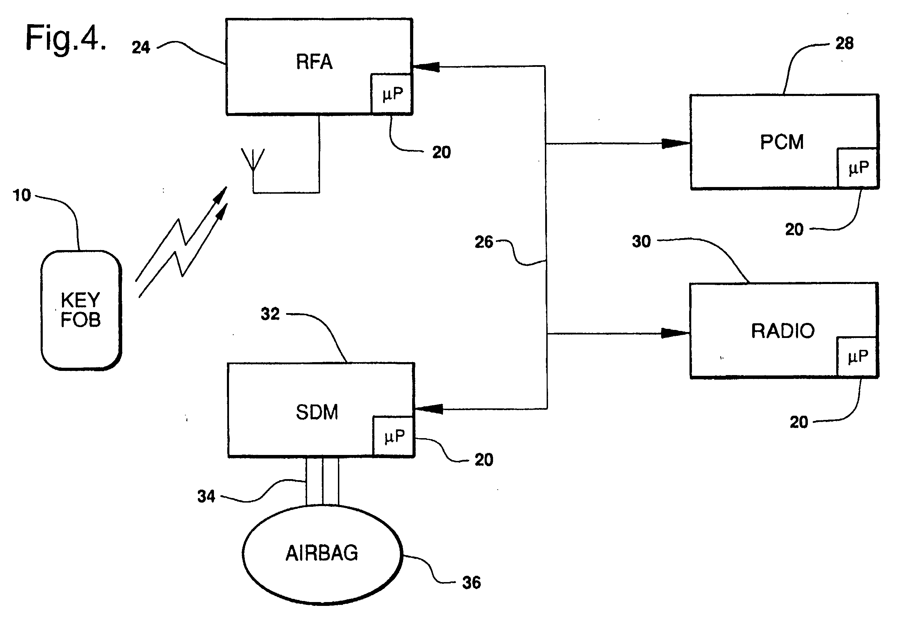

Referring to Figure 4, the theft deterrent system includes an RFA 24 and a key fob transmitter like those of Figure 1, and a serial data bus 26 coupled to the RFA 24, a PCM 28, a radio 30 and an SDM 32. The SDM 32 in turn is connected by a data link 34 to an airbag module 36. Battery power is connected to the RFA, the PCM, the SDM and the radio either directly or via an ignition line. Where there is no direct connection either to the battery or to the ignition information regarding the ignition state or whether the battery has been disconnected can be supplied by the RFA over the data link. The modules 24-32 each contain a microprocessor 20 embodying the same type of encryption engine as the transmitter so that transmitted messages may be interpreted in the same manner by each unit.

In operation, when the RFA receives a transmitted message containing a sequence number and an authenticator or cipher value, it verifies that the cipher value is correct and transmits it with the sequence number via the data bus 26 to the PCM, the radio and the SDM. Normally each of the latter units independently verifies that the cipher value is correct and enables normal operation of the respective module. If the cipher value is found to be incorrect, that module would be disabled or a telltale will be illuminated.

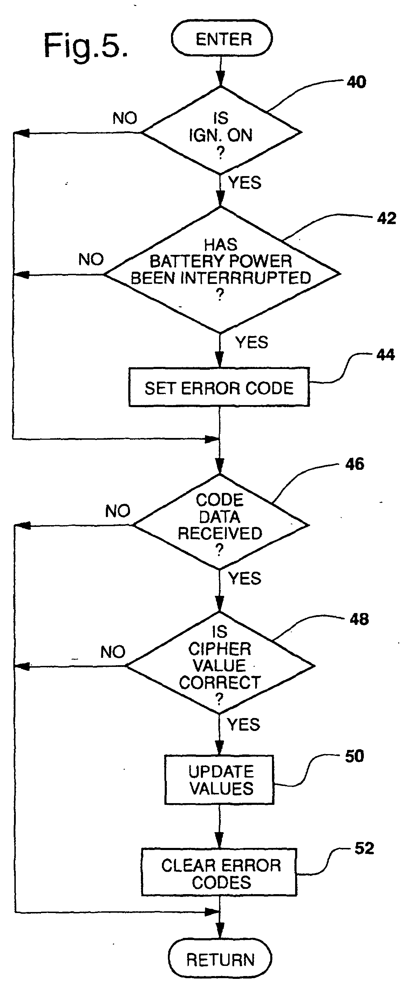

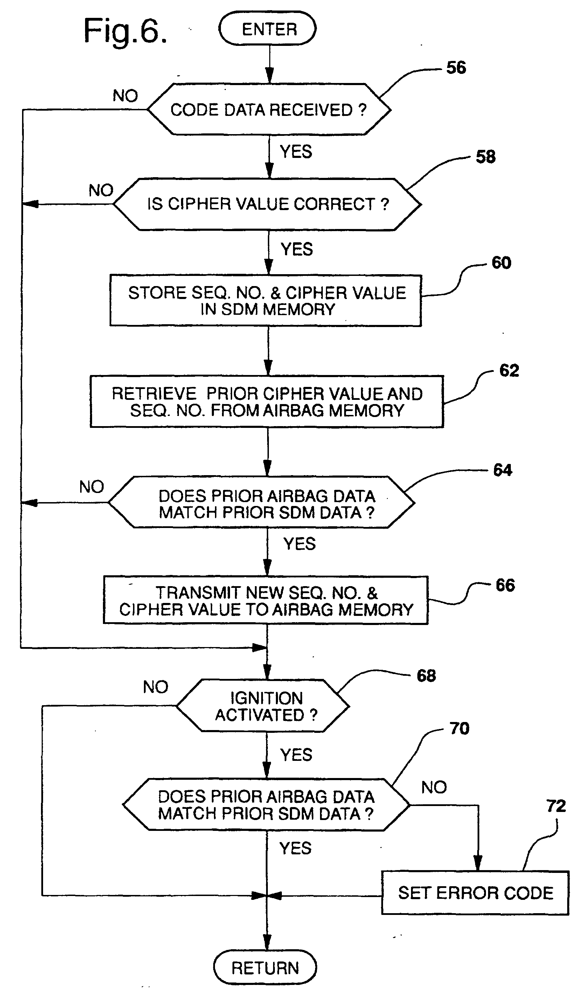

The flow charts of Figure 5 and 6 illustrate the method of operation. The functional description of each block in the charts is accompanied by a number in angle brackets <nn> which corresponds to the reference number of the block. The operation is the same for the radio and the PCM and is shown in Figure 5. The microprocessor 20 periodically examines the ignition and battery connection status. If the ignition is on <40> and the battery power has been interrupted <42>, an error code is set <44>. Next it is determined whether the cipher value and sequence number have been received <46>. The data is evaluated by the cryptographic engine and if it is verified as correct <48> the seed values and sequence number are updated in the microprocessor memory <50> and the error code is cleared <52>. If the data is not verified, the error code remains in effect. The error code may be used to disable the unit or to light a tell-tale indicating a problem.

The SDM and airbag modules present a special case. Since the SDM is generally installed in a location where it is difficult to steal, it is not disabled by an error code but it is used to protect the airbag module which is vulnerable. When the SDM receives and verifies a correct cipher value it stores the cipher value and sequence number and also transmits them to the airbag module where they are stored. Each time the ignition is activated the stored numbers are compared to determine whether they remain the same; if not, the air bag module is disabled or a tell-tale is illuminated. In addition, if the stored numbers do not match, updating to new numbers is not permitted. As shown in Figure 6,[ <54>.. Then] the SDM determines whether the sequence number and cipher value have been received <56> and if so whether the cipher value is correct <58>. If it is correct the data is stored in the SDM memory <60>. The SDM then retrieves numbers previously stored in the airbag module <62> and compares them to prior data stored in the SDM <64>. If they match, updating the stored numbers is permitted by transmitting the new data to the airbag module for storage in the airbag memory <66>. When the ignition is activated <68> the previous data stored in the airbag memory is transmitted to the SDM and compared, as in step 64, to the corresponding previous data stored in the SDM <70>. If the data does not match, an error code is set <72>.

Whenever an error code is set, the affected module is either disabled or a tell-tale is illuminated as a matter of design choice.

It will be seen that the invention permits detection of stolen modules when there is an attempt to operate them in another vehicle, thereby discouraging such theft. The system requires connection of the modules and the RFA to a data bus (in some vehicles such modules are already connected to a bus) and the microprocessors controlling the modules will have software changes to carry out the method.

## Claims

1. A theft deterrent system for electronic modules in a vehicle comprising:
a remote function actuator (RFA) coupled to a data link;
the RFA having a radio frequency link with a portable transmitter and actuated by data including a cipher value transmitted by the transmitter to apply the data to the data link when a correct cipher value is received;
at least one electronic module coupled to the RFA by the data link for receiving the data when applied to the link and independently verifying the cipher value; and
means within each module effective when vehicle ignition is activated for enabling normal module operation when the cipher value is verified.

2. The system as defined in claim 1 wherein the means within each module produces an error code when the cipher value issued by the RFA is not verified by the respective module.

3. The system as defined in claim 1 wherein:
each of the transmitter, RFA and modules contain a microprocessor programmed to execute a rolling code algorithm to determine a valid cipher value based on a sequence number in the transmitted data and a seed value.

4. The system as defined in claim 3 wherein one of the modules comprises a radio and wherein:
the radio includes means for disabling radio operation when battery power is disconnected from the radio and for enabling operation when a cipher value and sequence number are received.

5. The system as defined in claim 1 wherein one of the modules comprises a sensing and diagnostic module (SDM) for an airbag which in turn is connected by a serial link to an airbag module and wherein:
the SDM has a microprocessor programmed to verify a cipher value using a rolling code algorithm and for storing the verified cipher value cipher value and transferring the verified cipher value to the airbag module;
the airbag module has means for storing the verified cipher value and for transmitting the verified cipher value to the SDM when ignition is activated; and
the SDM includes means for setting an error code when the cipher value stored in the airbag module does not match the cipher value stored in the SDM.

6. The system as defined in claim 1 wherein each module includes means for setting an error code when battery power is removed from the module and for removing the error code when a valid cipher value is received from the transmitter.

7. A method of deterring theft of electronic modules from vehicles equipped with a remote function actuator (RFA) activated by digital data from a remote portable transmitter and coupled to the modules by a data bus comprising the steps of:
programming each of the transmitter, the RFA and the modules with an encryption algorithm and with seed values peculiar to a specific vehicle to enable the RFA and the modules to recognize a cipher value sent by the transmitter;
sending a cipher value from the transmitter to the RFA;
verifying the cipher value by the RFA and sending the cipher value to each module via the data bus;
verifying the cipher value by each module, enabling module operation when the cipher value is verified and setting an error code when the cipher value is not verified.

8. The method as defined in claim 7 including the steps of:
disabling module operation when an error code is set; and
enabling module operation when a valid cipher value is received.

9. The method as defined in claim 7 including the steps of:
when battery power is removed from a module setting an error code in the module; and
removing the error code to enable module operation when a valid cipher value is received and battery power is restored.

10. The method as defined in claim 7 wherein one of the modules comprises a sensing and diagnostic module (SDM) for an airbag which in turn is connected by a serial link to an airbag module including the steps of:
verifying the cipher value in the SDM;
storing the cipher value in the SDM and sending the cipher value to the airbag module;
storing the cipher value in the airbag module;
comparing the cipher value stored in the airbag module with the value stored in the SDM when vehicle ignition is activated; and
setting an error code when the cipher value stored in the airbag module does not match the cipher value stored in the SDM.

## Patentansprüche

1. Diebstahlsicherung für elektronische Module in einem Fahrzeug, umfassend:
einen mit einer Datenverbindung gekoppelten Fernauslöser (remote function actuator = RFA);
wobei der RFA eine Hochfrequenz-Verbindung mit einem tragbaren Sender aufweist und durch von dem Sender übertragene Daten, die einen Chiffrewert umfassen, aktiviert wird, um die Daten für die Datenverbindüng zu übernehmen, wenn ein richtiger Chiffrewert empfangen wird;
mindestens ein über die Datenverbindung mit dem RFA gekoppeltes elektronisches Modul, um die für die Datenverbindung übernommenen Daten zu empfangen und den Chiffrewert unabhängig zu bestätigen; und
Mittel innerhalb eines jeden Moduls, die, wenn die Fahrzeugzündung aktiviert ist, wirksam sind, um den normalen Modulbetrieb freizugeben, wenn der Chiffrewert bestätigt wurde.

2. System nach Anspruch 1, wobei das Mittel innerhalb eines jeden Moduls einen Fehlercode erzeugt, wenn der von dem RFA ausgegebene Chiffrewert nicht von dem jeweiligen Modul bestätigt wurde.

3. System nach Anspruch 1, wobei der Sender, der RFA und die Module jeweils einen Mikroprozessor beinhalten, welcher programmiert ist, einen Wechselcodealgorithmus auszuführen, um auf der Grundlage einer Laufnummer in den übertragenen Daten und eines Saatwerts einen gültigen Chiffrewert zu bestimmen.

4. System nach Anspruch 3, wobei eines der Module ein Radio umfasst, und wobei:
das Radio Mittel umfasst, welche den Radiobetrieb deaktivieren, wenn die Batterieenergie von dem Radio getrennt wird, und welche den Betrieb freigeben, wenn ein Chiffrewert und eine Laufnummer empfangen werden.

5. System nach Anspruch 1, wobei eines der Module ein Erfassungsund Diagnosemodul (sensing and diagnostic module = SDM) für einen Airbag umfasst, welches seinerseits über eine serielle Verbindung mit einem Airbag-Modul verbunden ist, und wobei:
das SDM einen Mikroprozessor aufweist, welcher programmiert ist, um einen Chiffrewert unter Verwendung eines Wechselcodealgorithmus zu bestätigen und den bestätigten Chiffrewert zu speichern und den bestätigten Chiffrewert zu dem Airbag-Modul zu übertragen;
das Airbag-Modul Mittel aufweist, welche den verifizierten Chiffrewert speichern und den verifizierten Chiffrewert zu dem SDM übertragen, wenn die Zündung aktiviert wird; und
das SDM Mittel umfasst, welche einen Fehlercode setzen, wenn der in dem Airbag-Modul gespeicherte Chiffrewert nicht mit dem in dem SDM gespeicherten Chiffrewert übereinstimmt.

6. System nach Anspruch 1, wobei jedes Modul Mittel umfasst, welche einen Fehlercode setzen, wenn die Batterieenergie von dem Modul entfernt wird, und den Fehlercode entfernen, wenn ein gültiger Chiffrewert von dem Sender empfangen wird.

7. Verfahren, um Fahrzeuge mit einem Fernauslöser (RFA), welcher durch digitale Daten von einem tragbaren Funksender aktiviert wird und mit den Modulen über einen Datenbus gekoppelt ist, gegen Diebstahl elektronischer Module zu sichern, umfassend die Schritte, dass:
der Sender, der RFA und die Module jeweils mit einem kryptographischen Algorithmus und mit für ein bestimmtes Fahrzeug spezifischen Saatwerten programmiert wird, um dem RFA und den Modulen zu ermöglichen, einen von dem Sender gesendeten Chiffrewert zu erkennen;
ein Chiffrewert von dem Sender an den RFA gesendet wird;
der Chiffrewert durch den RFA bestätigt wird und der Chiffrewert über den Datenbus an jedes Modul gesendet wird;
der Chiffrewert durch jedes Modul bestätigt wird, wobei der Modulbetrieb aktiviert wird, wenn der Chiffrewert bestätigt wird, und ein Fehlercode gesetzt wird, wenn der Chiffrewert nicht bestätigt wird.

8. Verfahren nach Anspruch 7, umfassend die Schritte, dass:
der Modulbetrieb deaktiviert wird, wenn ein Fehlercode gesetzt wird; und
der Modulbetriebs freigegeben wird, wenn ein gültiger Chiffrewert empfangen wird.

9. Verfahren nach Anspruch 7, umfassend die Schritte, dass:
in dem Modul ein Fehlercode gesetzt wird, wenn die Batterieenergie von einem Modul entfernt wird; und
der Fehlercode entfernt wird, um den Modulbetrieb zu freizugeben, wenn ein gültiger Chiffrewert empfangen wird und die Batterieenergie wieder hergestellt ist.

10. Verfahren nach Anspruch 7, wobei eines der Module ein Erfassungs- und Diagnosemodul (SDM) für einen Airbag umfasst, welches seinerseits über eine serielle Verbindung mit einem Airbag-Modul verbunden ist, umfassend die Schritte, dass:
der Chiffrewert in dem SDM bestätigt wird;
der Chiffrewert in dem SDM gespeichert wird und der Chiffrewert an das Airbag-Modul gesendet wird;
der Chiffrewert in dem Airbag-Modul gespeichert wird;
der in dem Airbag-Modul gespeicherte Chiffrewert mit dem in dem SDM gespeicherten Wert verglichen wird, wenn die Fahrzeugzündung aktiviert wird; und
ein Fehlercode gesetzt wird, wenn der in dem Airbag-Modul gespeicherte Chiffrewert nicht mit dem in dem SDM gespeicherten Chiffrewert übereinstimmt.

## Revendications

1. Système antivol pour modules électroniques dans un véhicule, comprenant:
un actionneur de fonction à distance (RFA) couplé à une liaison de données;
le RFA possédant une liaison à fréquence radio avec un émetteur portable et actionné par des données incluant une valeur de chiffrement transmise par l'émetteur pour appliquer les données à la liaison de données lorsqu'une valeur de chiffrement correcte est reçue;
au moins un module électronique couplé au RFA par la liaison de données pour recevoir les données lorsqu'elles sont appliquées et vérifier de façon indépendante la valeur de chiffrement; et
des moyens à l'intérieur de chaque module, efficaces lorsque l'allumage du véhicule est activé pour permettre un fonctionnement normal du module lorsque la valeur de chiffrement est vérifiée.

2. Système selon la revendication 1, dans lequel les moyens dans chaque module produisent un code d'erreur lorsque la valeur de chiffrement délivrée par le RFA n'est pas vérifiée par le module respectif.

3. Système selon la revendication 1, dans lequel:
chacun de l'émetteur, du RFA et des modules contient un microprocesseur programmé pour exécuter un algorithme de code roulant pour déterminer une valeur de chiffrement valable sur la base d'un numéro de séquence dans les données émises et d'une valeur de départ.

4. Système selon la revendication 3, dans lequel l'un des modules comprend un appareil radio, et dans lequel:
l'appareil radio inclut des moyens pour bloquer le fonctionnement de l'appareil radio lorsque la puissance de la pile est déconnectée de l'appareil radio et pour permettre le fonctionnement lorsqu'une valeur de chiffrement et un numéro de séquence sont reçus.

5. Système selon la revendication 1, dans lequel l'un des modules comprend un module de détection et de diagnostic (SDM) pour un airbag, qui à son tour est connecté par une liaison série à un module d'airbag, et dans lequel:
le SDM possède un microprocesseur programmé pour vérifier une valeur de chiffrement utilisant un algorithme de code roulant et pour mémoriser la valeur de chiffrement vérifiée et transférer la valeur de chiffrement vérifiée au module d'airbag;
le module d'airbag comporte des moyens pour mémoriser la valeur de chiffrement vérifiée et pour transmettre la valeur de chiffrement vérifiée au SDM lorsque l'allumage est activé; et
le SDM inclut des moyens pour établir un code d'erreur lorsque la valeur de chiffrement mémorisée dans le module d'airbag ne concorde pas avec la valeur de chiffrement mémorisée dans le module SDM.

6. Système selon la revendication 1, dans lequel chaque module inclut des moyens pour établir un code d'erreur lorsque l'énergie de la pile est retirée du module et pour retirer le code d'erreur lorsqu'une valeur de chiffrement valable est reçue de la part de l'émetteur.

7. Procédé de protection antivol de modules électroniques pour détecter le vol de modules électroniques à partir de véhicules équipés d'un actionneur de fonction à distance (RFA) activé par des données numériques à partir d'un émetteur portable distant accouplé aux modules par un bus de données comprenant les étapes consistant à:
programmer chacun de l'émetteur, du RFA et des modules qu'un algorithme de cryptage avec des valeurs de départ spécifiques pour un véhicule spécifique de manière à permettre au RFA et aux modules d'identifier une valeur de chiffrement envoyée par l'émetteur; et
envoyer une valeur de chiffrement de l'émetteur au RFA;
vérifier la valeur de chiffrement au moyen du RFA et envoyer la valeur de chiffrement à chaque module par l'intermédiaire du bus de transmission de données;
vérifier la valeur de chiffrement au moyen de chaque module, permettant le fonctionnement du module lorsque la valeur de chiffrement est vérifiée et établir un code d'erreur lorsque la valeur de chiffrement n'est pas vérifiée.

8. Procédé selon la revendication 7, incluant les étapes consistant à:
bloquer le fonctionnement du module lorsqu'un code d'erreur est réglé; et
autoriser un fonctionnement du module lorsqu'une valeur de chiffrement valable est reçue.

9. Procédé selon la revendication 7, incluant les étapes consistant à:
lorsque l'énergie de la pile est retirée d'un module, établir un code d'erreur dans le module; et
retirer le code d'erreur pour autoriser le fonctionnement du module lorsqu'une valeur de chiffrement valable est reçue et que l'énergie de la pile est rétablie.

10. Procédé selon la revendication 7, selon lequel l'un des modules comprend un module de détection et de diagnostic (SDM) pour un airbag qui à son tour est connecté par une liaison série à un module d'airbag, incluant les étapes consistant à:
vérifier la valeur de chiffrement dans le SDM;
mémoriser la valeur de chiffrement dans le SDM et envoyer la valeur de chiffrement au module d'airbag;
mémoriser la valeur de chiffrement dans le module d'airbag;
comparer la valeur de chiffrement mémorisée dans le module d'airbag à la valeur mémorisée dans le SDM lorsque l'allumage du véhicule est activé; et
établir un code d'erreur lorsque la valeur de chiffrement mémorisée dans le module d'airbag ne concorde pas avec la valeur de chiffrement mémorisée dans le SDM.
